# EUROPEAN PATENT SPECIFICATION

(11) **EP 3 825 009 B1**
(45) Date of publication and mention of the grant of the patent: **08.01.2025**
(21) Application number: 19838671.6
(22) Date of filing: 25.06.2019
(51) Int. Cl.: B03C 1/247, B03C 1/00, B23Q 11/00, B24B 55/12, B03C 1/14

(54) **MAGNETIC DRUM AND MAGNETIC SEPARATION DEVICE**
MAGNETTROMMEL UND MAGNETISCHE TRENNVORRICHTUNG
TAMBOUR MAGNÉTIQUE ET DISPOSITIF DE SÉPARATION MAGNÉTIQUE

(30) Priority: 20.07.2018 JP 2018136630
(43) Date of publication of application: 26.05.2021
(73) Proprietor: Sumitomo Heavy Industries Finetech, Ltd., Kurashiki-shi, Okayama 713-8501 (JP)
(72) Inventor: NISHIZAWA Shinya, Kurashiki-shi, Okayama 713-8501 (JP)
(74) Representative: Walcher, Armin
(86) International application number: PCT/JP2019/025139
(87) International publication number: WO 2020/017256

(56) References cited:
- EP-A1- 2 485 368
- GB-A- 389 920
- JP-A- 2009 172 589
- JP-A- 2009 172 590
- JP-A- 2013 252 498

## Description

### Technical Field

The present invention relates to a magnetic drum in which a plurality of magnets are disposed, and a magnetic separation device provided with the magnetic drum.

### Background Art

A coolant liquid is used in metal processing such as cutting and grinding of a metal material, particularly a magnetic material which is represented by a steel material. The coolant liquid used in the metal processing is recovered as a coolant liquid containing shavings, cutting chips, or the like, and the used and recovered coolant liquid is reused by separating the shavings, the cutting chips, or the like therefrom. Then, as a device for separating shavings, cutting chips, or the like from the used coolant liquid, a magnetic separation device for separating magnetic materials such as shavings or cutting chips by a magnet is known.

For example, PTL 1 discloses a magnetic drum type magnetic separation device that includes a magnetic drum (rotary drum) in which a plurality of magnets are disposed, and separates unnecessary substances (magnetic sludge) in the used coolant liquid. Further, PTL 1 discloses a configuration in which the magnetic drum includes an inner cylinder in which a plurality of magnets are disposed, and an outer cylinder made of a non-magnetic material, the plurality of magnets are disposed in the inner cylinder such that the north pole and the south pole are directed in a circumferential direction, and the plurality of magnets are disposed as an annular magnet row on three-quarters of the peripheral surface such that the same poles of two magnets adjacent to each other face each other.

According to the disposition of the magnets in the magnetic drum disclosed in PTL 1, the magnetic fluxes between the two magnets adjacent to each other repel each other, and most of the magnetic fluxes come out in a radial direction (outward direction). That is, the magnetic flux density that comes out to the outside can increase. In this way, it becomes possible to adsorb and separate even week magnetic particles that contain only a small amount of magnetic materials.

PTL 2 discloses a separator comprising a rotary drum having a built-in inner cylinder arranged with two or more magnets and an outer cylinder made of a nonmagnetic material and being rotatable around the fixed inner cylinder and separates unnecessary matter in the treated coolant liquid. In the inner cylinder, two or more magnets are arranged in the area accounting for nearly three fourths of the peripheral surface in the form of a nearly circular train so that two adjacent magnets face mutually with the same poles. A yoke made of a magnetic or nonmagnetic material is arranged between two circumferentially adjacent magnets, among the magnets arranged. The rotary drum of PTL2 comprises the features of the preamble of the independent claim 1.

### Citation List

### Patent Literature

[PTL 1] Japanese Patent No. 4948514
[PTL 2]: Japanese Patent application JP 2009 172590 A,

### Summary of Invention

### Technical Problem

In the magnetic drum, at the time of assembly, a strong repulsive force or attractive force is generated between the magnets adjacent to each other, and thus a force that moves the magnet in the circumferential direction or the outward direction of the magnetic drum acts. Therefore, the magnet moves at the time of assembly of the magnetic drum, and thus there is a problem that the assembling work is hindered. Further, even after the assembly, there is a concern that the disposition of the magnets in the magnetic drum may change, so that the design magnetic flux density of the magnetic drum may not be obtained.

Therefore, an object of the present invention is to suppress the movement of a magnet at the time of assembly in a magnetic drum and a magnetic separation device in which a plurality of magnets are disposed in a circumferential direction, and to easily assemble the magnetic drum. Further, an object of the present invention is to suppress a change in the disposition of the magnets so as not to impair the design function of the magnetic drum, in the magnetic drum after the assembly. Solution to Problem

The inventor of the present invention has performed intensive studies on the above problems, and as a result, has found that in a magnetic drum in which a plurality of magnets are disposed, the movement of the magnet at the time of assembly can be suppressed by engagement of the magnet with the holder such that the magnets do not move in the circumferential direction of the holder, and has completed the present invention.

The invention is set out in the appended set of claims. That is, the present invention relates to the following magnetic drum and magnetic separation device.

In order to solve the above problems, according to an aspect of the present invention, there is provided a magnetic drum according to claim 1 including inter alia: a plurality of magnets mounted along a circumferential direction on a holder, in which the magnets are disposed such that magnetic pole surfaces face each other along the circumferential direction on the holder, and the magnets are engaged with the holder so as not to move in the circumferential direction.

According to this magnetic drum, since the magnet is engaged with the holder so as not to move in the circumferential direction of the holder, it is possible to suppress the movement of the magnet in the circumferential direction at the time of assembly and to easily assemble the magnetic drum. Further, in the magnetic drum after assembly, it is possible to suppress a change in the disposition of the magnets so as not to impair the design function of the magnetic drum.

According to the present invention, the magnet and the holder are locked together by fitting of a recessed portion and a protrusion portion to each other.

According to this feature, since the holder and the magnet are locked together by fitting of the recessed portion and the protrusion portion to each other, it is not necessary to use a separate member other than the holder and the magnet, and it becomes possible to suppress the movement of the magnet with a simple structure. Further, by reducing the number of parts, it becomes possible to improve work efficiency.

According to the present invention, the recessed portion is a groove, and the groove is formed along a direction intersecting the circumferential direction of the holder.

According to this feature, since the holder and the magnet are locked together by the groove formed in the direction intersecting the circumferential direction of the holder, there is an effect that the structural strength is high against a force with which the magnet moves in the circumferential direction.

According to the present invention, the direction in which the groove intersects is an axial direction of the holder.

According to this feature, the direction of the groove formed in the holder is set to be the axial direction of the holder, whereby it is possible to reliably perform immobilization of the fitted magnet, and it becomes possible to more reliably suppress the movement of the magnet in the circumferential direction of the holder.

As an embodiment of the magnetic drum according to the present invention, the holder is composed of a plurality of holder parts, the magnets are mounted to each of the holder parts, and the magnets are disposed such that the same poles of the magnets adjacent to each other face each other in a state where the plurality of holder parts are combined.

When magnets are mounted on one holder, a strong repulsive force or attractive force is applied when fixing the magnets adjacent to each other, and therefore, a mounting operation of the magnet is difficult. According to the above feature, since the holder is composed of a plurality of holder parts, it becomes possible to easily assemble the magnetic drum, for example, by mounting the magnets in a separated manner to each holder in advance and combining the holder parts with the magnets mounted thereto.

In order to solve the above problems, according to another aspect of the present invention, there is provided a magnetic separation device including: the magnetic drum that is rotated to separate magnetic materials in a coolant liquid.

According to this magnetic separation device, since the magnetic drum in a state where the design function is maintained can be used, it becomes possible to efficiently separate magnetic materials from a treatment target containing the magnetic materials, such as a coolant liquid.

### Advantageous Effects of Invention

According to the present invention, in the magnetic drum and the magnetic separation device in which a plurality of magnets are disposed in the circumferential direction, it is possible to suppress the movement of the magnet at the time of assembly and to easily assemble the magnetic drum. Further, in the magnetic drum after assembly, it is possible to suppress a change in the disposition of the magnets so as not to impair the design function of the magnetic drum.

### Brief Description of Drawings

Fig. 1 is a schematic explanatory diagram showing the structure of a magnetic separation device which includes a magnetic drum according to a first embodiment of the present invention.
Fig. 2 is a schematic explanatory diagram (a perspective view) showing the structure of a holder in the magnetic drum according to the first embodiment of the present invention.
Fig. 3 is a schematic explanatory diagram (a perspective view) related to assembly of the magnetic drum using the holder according to the first embodiment of the present invention.
Fig. 4 is a plan view showing the magnetic drum according to the first embodiment of the present invention.
Fig. 5 is a partial schematic diagram showing the direction and flow of a magnetic flux in the magnetic drum according to the first embodiment of the present invention.
Fig. 6 is a plan view showing another aspect of a magnet engagement part in the holder according to the first embodiment of the present invention.
Fig. 7 is a plan view showing a magnetic drum according to a second embodiment of the present invention.
Fig. 8 is a plan view showing the structure of a magnet engagement part in a holder of a magnetic drum according to a third embodiment of the present invention.
Fig. 9 is a plan view showing the structure of a magnet engagement part in a holder of a magnetic drum according to a fourth embodiment of the present invention.
Fig. 10 is a schematic explanatory diagram (a plan view) describing the structure of a magnetic drum according to a fifth embodiment of the present invention.

### Description of Embodiments

The magnetic drum and the magnetic separation device according to the present invention are for recovering, for example, magnetic materials such as magnetic sludge contained in a liquid to be treated by a magnetic force. As the liquid to be treated, as long as it contains magnetic materials, it is not particularly limited and may be an oil-based liquid or a water-soluble liquid. As a general liquid to be treated, a coolant liquid in a metal polishing machine using magnetic metal as a work material, a plating liquid in a device for plating a steel sheet or the like, or the like can be given as an example. The magnetic separation device according to the present invention can recover magnetic materials from these liquids to be treated and purify the liquids to be treated. In addition, the magnetic drum and the magnetic separation device according to the present invention can also be used, for example, for recovery of useful metals or rare metals from industrial wastes, removal of foreign matter from beverages, cooking oil, or the like, or the like.

Hereinafter, embodiments of the present invention will be described in detail with reference to the accompanying drawings.

### [First Embodiment]

### <Magnetic Separation Device>

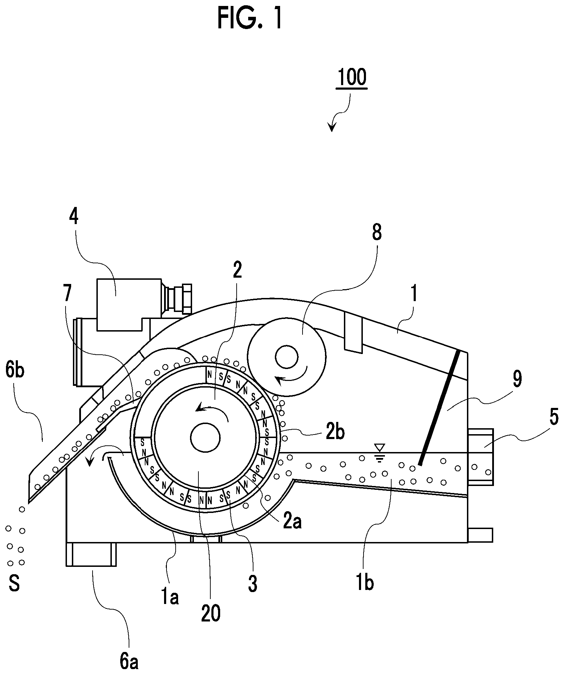

Fig. 1 shows the structure of a magnetic separation device 100 according to a first embodiment of the present invention. The magnetic separation device 100 according to the present invention includes a main body 1 composed of a rectangular casing, and a magnetic drum 2 which is suspended over a width direction of the main body 1 and magnetically attracts magnetic sludge and discharges it to the outside of a liquid to be treated. Further, the main body 1 is provided with an input part 5 for inputting a liquid to be treated containing magnetic sludge (magnetic materials) into the main body 1, a treatment liquid discharge part 6a for discharging a treatment liquid from which the magnetic sludge has been removed, and a magnetic material discharge part 6b for discharging the magnetic sludge. The magnetic drum 2 is disposed between the input part 5 and the treatment liquid discharge part 6a.

A bottom plate 1a formed along the shape of the magnetic drum 2 is provided at a lower part of the main body 1, and a liquid reservoir 1b for storing the liquid to be treated is formed. The liquid to be treated, which is supplied to the main body 1 by a pump or the like, flows in from the input part 5, is temporarily stored in the liquid reservoir 1b, and then passes between the magnetic drum 2 and the bottom plate 1a. When the liquid to be treated passes between the magnetic drum 2 and the bottom plate 1a, the magnetic sludge contained in the liquid to be treated adheres to the magnetic drum 2 due to the magnetic flux of the magnetic drum 2. The treatment liquid from which the magnetic sludge has been removed by the magnetic drum 2 overflows the bottom plate 1a and is discharged from the treatment liquid discharge part 6a.

Further, a flow regulating wall 9 is installed to be spaced apart from the input part 5 inside the main body 1. The flow regulating wall 9 is made of a plate material suspended from the ceiling surface of the main body 1, and a lower end thereof is located below the liquid surface of the liquid to be treated stored in the liquid reservoir 1b. Since the flow velocity of the liquid to be treated which has flowed in increases when the liquid to be treated passes between the flow regulating wall 9 and the bottom plate 1a, the flow regulating wall 9 exhibits an effect of suppressing the accumulation of the magnetic sludge on the bottom portion of the liquid reservoir 1b.

### <Magnetic Drum>

The magnetic drum 2 is for magnetically attracting the magnetic sludge and separating it from the liquid to be treated. As shown in Fig. 1, the magnetic drum 2 is supported substantially horizontally in a direction orthogonal to the flow of the liquid to be treated, and the approximately lower half is immersed under the liquid surface of the liquid to be treated, and the approximately upper half is installed so as to come out of the liquid surface.

The magnetic drum 2 is composed of two cylindrical bodies: an inner cylinder 2a and an outer cylinder 2b, and a plurality of magnets 3 fixed to the outer periphery of the inner cylinder 2a through a holder 20. The structure of the holder 20 and the disposition of the magnets 3 will be described later. However, the plurality of magnets 3 can cause a predetermined magnetic force to act on the outer peripheral surface of the outer cylinder 2b to magnetically attract the magnetic sludge to the outer peripheral surface of the outer cylinder 2b. The two cylindrical bodies are each formed of a non-magnetic material such as stainless steel, and a magnetic force is not generated from the cylindrical bodies.

The inner cylinder 2a is fixedly installed, and a range in which the magnetic force acts on the outer peripheral surface of the outer cylinder 2b can be set by the disposition of the plurality of magnets 3 fixed to the outer periphery of the inner cylinder 2a. The range in which the magnetic force acts on the outer peripheral surface of the outer cylinder 2b is appropriately designed according to the outer diameter of the magnetic drum 2, the position of a scraper 7 (described later), or the like. In the magnetic separation device 100 of the first embodiment, a magnetic force acts on the range of approximate three-quarters of the outer peripheral surface of the outer cylinder 2b from the portion of the magnetic drum 2 immersed in the liquid reservoir 1b to the top portion. Further, no magnet is disposed at the remaining approximate one-quarter of the outer peripheral surface of the outer cylinder 2b, and thus a magnetic force does not act.

On the other hand, the outer cylinder 2b is installed coaxially with the inner cylinder 2a and is rotated by the driving force of a motor 4. The rotation direction of the outer cylinder 2b is a direction opposite to the flow of the liquid to be treated passing below (a counterclockwise direction when viewed above the paper surface of Fig. 1).

Further, as shown in Fig. 1, a roller 8 for squeezing a liquid component from the magnetic sludge magnetically attracted to the magnetic drum 2, and the scraper 7 for scraping the magnetic sludge from which the liquid component has been squeezed from the magnetic drum 2 are installed in the vicinity of the top portion of the magnetic drum 2.

The roller 8 has an elastic body such as rubber disposed on the surface thereof, and is in contact with the outer peripheral surface of the outer cylinder 2b of the magnetic drum 2 with a predetermined pressure.

The scraper 7 is installed at a region where a magnetic force does not act, and is in contact with the outer peripheral surface of the outer cylinder 2b of the magnetic drum 2.

Next, the operation of the magnetic drum 2 will be described. The magnetic sludge adheres to the outer peripheral surface of the magnetic drum 2 immersed in the liquid to be treated, due to the action of a magnetic force. Here, when the outer cylinder 2b of the magnetic drum 2 rotates, the magnetic sludge moves in the rotation direction of the outer cylinder 2b due to a frictional force with the outer peripheral surface of the outer cylinder 2b while being magnetically attracted to the outer peripheral surface of the magnetic drum 2. Then, the magnetically attracted magnetic sludge passes between the outer peripheral surface of the magnetic drum 2 and the roller 8, whereby the liquid component of the magnetic sludge is squeezed out, and therefore, the magnetic sludge having a small amount of liquid component can be separated and recovered. Next, the magnetic sludge from which the liquid component has been squeezed out moves to a position where no magnetic force acts, and is scraped off from the outer peripheral surface of the magnetic drum 2 by the scraper 7. The scraped magnetic sludge S is discharged from the magnetic material discharge part 6b.

In the first embodiment, the magnetic separation device provided with one magnetic drum 2 has been exemplified. However, the magnetic separation device according to the present invention may be provided with a plurality of magnetic drums.

Further, in the first embodiment, the magnetic drum in which the inner cylinder 2a is fixed and the outer cylinder 2b rotates has been exemplified. However, the magnetic drum according to the present invention may have a configuration in which the outer cylinder 2b is fixed and the inner cylinder 2a rotates. Further, the inner cylinder 2a or the outer cylinder 2b does not need to be necessarily provided. For example, a configuration may be made in which the holder 20 is directly fixed to a rotary shaft part without the inner cylinder 2a and the rotary shaft part or the outer cylinder 2b is rotated, so that the magnetic drum rotates.

### [Holder]

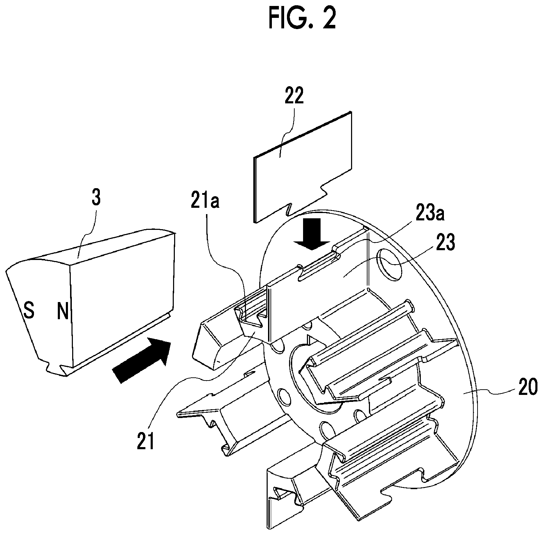

Fig. 2 shows a schematic explanatory diagram (a perspective view) of the structure of the holder in the magnetic drum according to the first embodiment of the present invention.

The holder 20 is made of a non-magnetic material such as stainless steel (SUS304 or the like), Cu, Al, brass, or the like, and has a magnet engagement part 21 which is a structure for engaging the magnet 3 with the holder 20 such that the magnet 3 does not move in the circumferential direction. Further, the holder 20 may be provided with a yoke fixing part 23 such that a yoke 22 can be sandwiched between the magnets 3 to perform control of the magnetic force.

First, the disposition of the magnets 3 in the holder 20 will be described. As shown in Fig. 2, the magnet engagement parts 21 are formed at regular intervals in the holder 20, and the magnets 3 are engaged with the magnet engagement parts 21 such that the magnetic pole surfaces of the magnets 3 adjacent to each other face each other in the circumferential direction of the holder 20. In this way, when the magnet 3 is engaged with the holder 20, it becomes possible to perform work in a state where the repulsive force or the attractive force between the magnets 3 is suppressed.

Next, the magnet engagement part 21 which is a structure for engaging the magnet 3 in the holder 20 will be described. The holder 20 and the magnet 3 are locked together by fitting of a recessed portion and a protrusion portion to each other, and as an example of the magnet engagement part 21 which is provided on the holder 20 side, a groove which is provided in the holder 20 can be given. A part of the magnet 3 is processed in accordance with the shape of the groove, and the holder 20 and the magnet 3 are fitted to each other, whereby it becomes possible to reliably fix the magnet 3 to the holder 20 without providing a separate member.

Further, the direction of the groove which is provided in the holder 20 is formed along the direction intersecting the circumferential direction of the holder 20. In this way, structural strength is increased against the action of the magnet 3 moving in the circumferential direction of the holder 20, and therefore, it becomes possible to more reliably suppress the movement of the magnet 3 in the circumferential direction of the holder 20. Further, the direction of the groove which is provided in the holder 20 is set to be the axial direction of the holder 20. In this way, a state is created in which the direction in which the magnet 3 is locked is orthogonal to the action of the magnet 3 moving in the circumferential direction of the holder 20, and therefore, it becomes possible to further suppress the movement of the magnet 3 in the circumferential direction of the holder 20.

Fig. 2 shows a dovetail groove 21a formed in the holder 20, as an example of the shape of the groove which is provided in the holder 20 as the magnet engagement part 21, and a protrusion portion of the bottom portion of the magnet 3, which is processed in accordance with the dovetail groove 21a. As shown in Fig. 2, the holder 20 and the magnet 3 are fitted to each other by the dovetail groove 21a, whereby it becomes possible not only to restrict the movement of the magnet 3 in the circumferential direction on the holder 20 but also to suppress the movement of the magnet 3 even with respect to a force acting toward the outside of the holder 20 due to the repulsive force of the magnet 3.

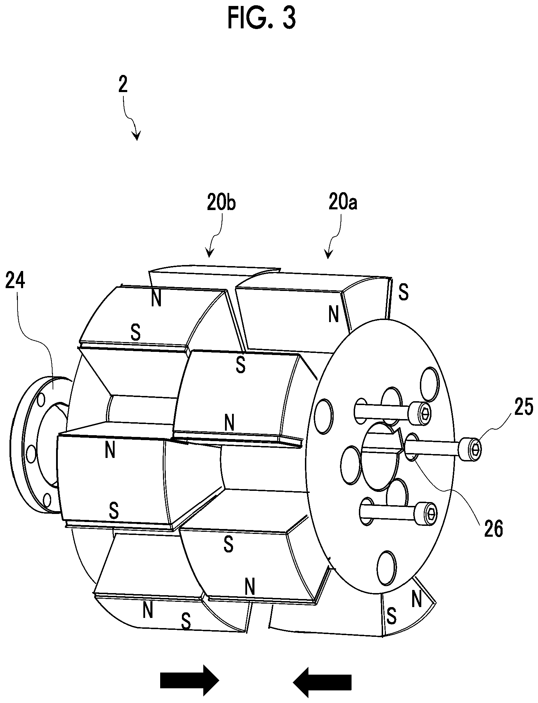

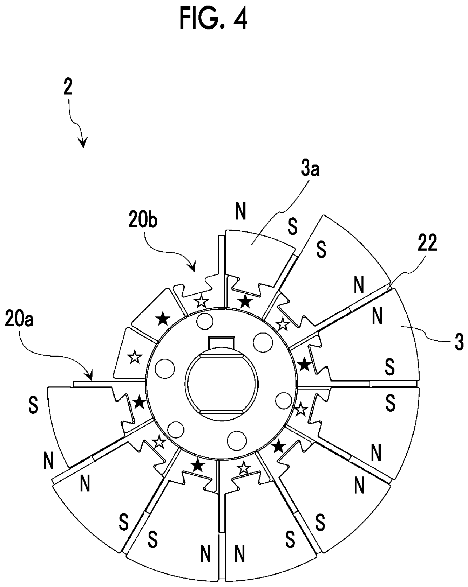

Fig. 3 shows a schematic explanatory diagram (a perspective view) related to the assembly of the magnetic drum using the holder according to the first embodiment of the present invention. Further, Fig. 4 is a plan view of the magnetic drum according to the first embodiment of the present invention.

As shown in Fig. 3, the magnetic drum 2 of this embodiment has two holder parts (first holder part 20a and second holder part 20b) on which the magnets 3 are mounted, and the magnetic drum 2 is formed by combining the first holder part 20a and the second holder part 20b. In the magnetic drum 2 in Fig. 3, the magnetic drum 2 is formed by integrally locking the first holder part 20a and the second holder part 20b through through-holes 26 provided in the respective holders by using a fixing ring 24 and a fixing bolt 25.

The method of combining the first holder part 20a and the second holder part 20b is not particularly limited. For example, in addition to locking the holder parts together using bolts, screws, or the like, as shown in Fig. 3, the first holder part 20a and the second holder part 20b may be integrated by providing the first holder part 20a and the second holder part 20b themselves with structures capable of fitting them to each other. When the first holder part 20a and the second holder part 20b are integrated, a repulsive force is generated between the magnets mounted on the respective holders, and therefore, it is preferable to integrate the holder parts while applying pressure with a compressor or the like. In this way, in the production of the magnetic drum, the magnetic drum can be assembled in a state where the movement of the magnets due to the repulsive force or the attractive force between the magnets is suppressed, rather than disposing a plurality of magnets such that the magnetic pole surfaces of the magnets face each other on one holder, and thus it becomes possible to easily perform work.

As shown in Fig. 3, in the magnetic drum 2 of this embodiment, the magnets are mounted such that the magnetic pole of the magnet mounted on the first holder part 20a and the magnetic pole of the magnet mounted on the second holder part 20b are opposite to each other in the circumferential direction of the holder. Further, by combining the first holder part 20a and the second holder part 20b, as shown in Fig. 4, the magnets 3 on the magnetic drum 2 are disposed such that the same poles face each other. The black star mark in Fig. 4 indicates the first holder part 20a side, and the white star mark indicates the second holder part 20b side.

By disposing the plurality of magnets 3 in this manner, the magnetic fluxes between the two magnets 3 adjacent to each other repel each other and most of the magnetic fluxes come out to the outside in the radial direction of the magnetic drum 2. That is, the effective magnetic flux which comes out on the outer peripheral surface of the outer cylinder 2b of the magnetic drum is significantly increased.

Figs. 3 and 4 show that when the first holder part 20a and the second holder part 20b are combined, the magnets 3 on the magnetic drum 2 are disposed such that the same poles face each other. However, there is no limitation thereto. For example, when a magnetic drum is formed by combining two holders on which magnets are mounted, the magnets may be disposed such that different poles of the magnets face each other along the circumferential direction of the magnetic drum.

As shown in Fig. 4, in the holder 20 of this embodiment, the plurality of magnets 3 are disposed in the range of approximate three-quarters of the outer peripheral surface of the magnetic drum 2, and at end portions, the magnets 3 are disposed such that the size of the magnet is gradually reduced. That is, a magnet 3a smaller than the magnet 3 is disposed. This is because the surface magnetic force of the magnetic drum 2 is higher than that of a magnetic drum of the related art, so that after the magnetic sludge S is adsorbed by using the magnetic drum 2 in the magnetic separation device 100, a situation may occur where the scraper 7 alone cannot scrape the magnetic sludge S off. Therefore, in the holder 20 of this embodiment, the magnet 3a having a smaller magnetic force than the magnet 3 is disposed such that the magnetic flux density gradually decreases at the end portion in the magnets mounted in the circumferential direction, and magnets are not disposed on the remaining approximate one-quarter of the outer peripheral surface of the outer cylinder 2b of the magnetic drum, so that a magnetic force does not act.

Further, as shown in Fig. 2, the holder 20 of this embodiment includes the yoke fixing part 23 for disposing the yoke, and the yoke 22 is sandwiched between the two magnets 3 adjacent to each other. As the material of the yoke 22, for example, a magnetic material such as SPCC can be used. The yoke 22 does not need to be necessarily provided.

The specific structure of the yoke fixing part 23 is not particularly limited, and may have, for example, a dovetail groove 23a provided close to the magnet engagement part 21, as shown in Fig. 2, and the magnet engagement part 21 and the yoke 22 may be integrally configured. Further, the yoke fixing part 23 may be provided on at least one side with respect to the magnet engagement part 21. In this way, when the two holder parts (first holder part 20a and second holder part 20b) are combined, one yoke 22 is disposed between the two magnets 3 adjacent to each other.

In this manner, the yoke 22 is sandwiched between two magnets adjacent to each other, whereby it is possible to easily control the direction of the effective magnetic flux coming out of the outer peripheral surface of the outer cylinder 2b of the magnetic drum.

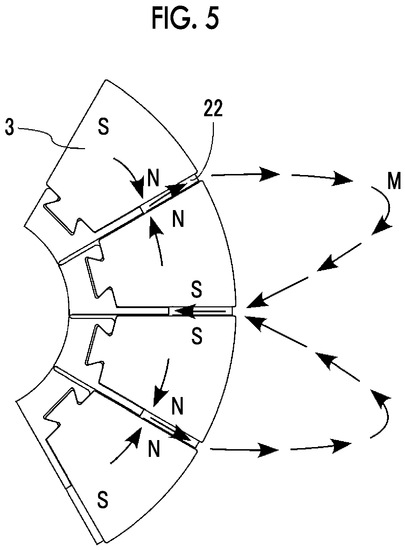

Fig. 5 is a partial schematic diagram showing the direction and flow of the magnetic flux in the magnetic drum according to the first embodiment of the present invention. The arrow in Fig. 5 indicates the direction of a magnetic flux M.

As shown in Fig. 5, in a case where the magnetic fluxes between the two magnets 3 adjacent to each other face each other, the magnetic fluxes repel each other, and most of the magnetic fluxes M come out to the outside in the radial direction of the magnetic drum 2 and wrap around in the direction of the yoke 22 adjacent thereto. On the other hand, in a case where the magnetic fluxes between the two magnets 3 adjacent to each other do not face each other, the magnetic flux M from the outside is drawn in. That is, the magnetic flux M that has come out to the outside is drawn in.

As the shape of the groove which is provided in the holder 20, it is not limited to the dovetail groove 21a as shown in Fig. 2, and other groove shapes may be used.

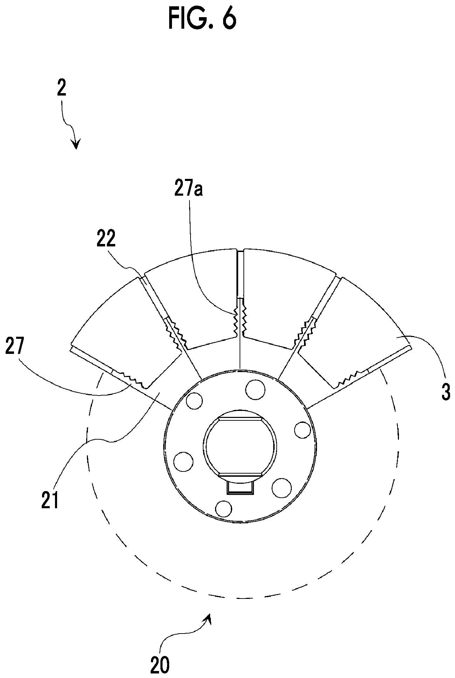

Fig. 6 is a plan view showing another aspect of the magnet engagement part in the holder of this embodiment. Fig. 6 shows only a part of the holder, and the broken line portion indicates an omitted portion.

Fig. 6 shows a state where a plurality of grooves 27a are provided in a side wall portion 27 in a region where the magnet 3 is mounted in the holder 20, and the side surface of the magnet 3 is processed in accordance with the groove 27a to fit to the groove 27a. In this way, it becomes possible to simplify the work related to the processing of the holder 20 and the magnet 3. Further, as shown in Fig. 6, the side wall portion 27 may also serve as the yoke fixing part 23 for sandwiching the yoke 22.

In the holder 20 of this embodiment, the magnet 3 can be sufficiently fixed even with direct engagement. However, the magnet may be engaged by using an adhesive or the like. In this way, further immobilization becomes possible. Further, depending on the combination of the materials of the holder 20 and the magnet 3, the fitting may be performed by using a lubricant or the like that temporarily reduces friction. In this way, it becomes possible to improve the work efficiency related to the mounting of the magnet 3 to the holder 20.

### [Second Embodiment]

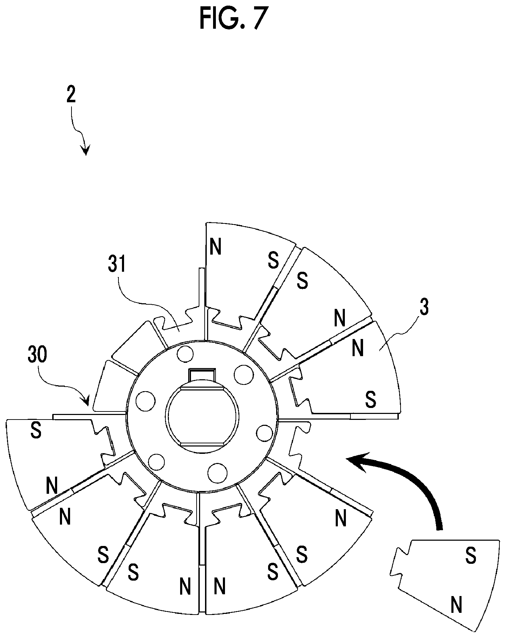

Fig. 7 shows another aspect of the magnetic drum according to the present invention. In this magnetic drum, a configuration is given in which magnet engagement parts 31 are provided such that a plurality of magnets 3 are engaged in contiguity with each other along the circumferential direction on one holder 30 and the magnets 3 are disposed such that different poles or the same poles of the magnets 3 face each other along the circumferential direction of the holder 30.

In this case, as the magnet engagement part 31, a structure is preferably adopted in which a groove is formed as a recessed portion formed along the direction intersecting the circumferential direction of the holder 30 and a protrusion portion provided on the bottom portion of the magnet 3 is fitted to the groove. In this way, a state is created where the direction in which the magnets 3 are locked is orthogonal to the direction of the repulsive force or the attractive force acting between the magnets 3 fitted along the circumferential direction of the holder 30, and therefore, it is possible to suppress the movement of the magnet 3 in the circumferential direction of the holder 30 and toward the outside.

As a specific example of the magnet engagement part 31, the dovetail groove as shown in the first embodiment can be given. However, there is no limitation thereto. For example, a T-groove and a shape in which a part thereof is processed may be adopted.

The holder 30 of this embodiment may be provided with the yoke fixing part 23 for sandwiching the yoke 22 as shown in the first embodiment. Further, the magnet 3a having a smaller magnetic force than the magnet 3 as shown in the first embodiment may be gradually provided.

Further, the magnetic drum using the holder 30 of this embodiment can be used for the magnetic separation device of the first embodiment described above.

For example, the magnet engagement part in the holder of the magnetic drum according to the present invention may suppress the movement of the magnet along the circumferential direction of the holder, and there is no limitation to the structures of the grooves as shown in the first and second embodiments described above.

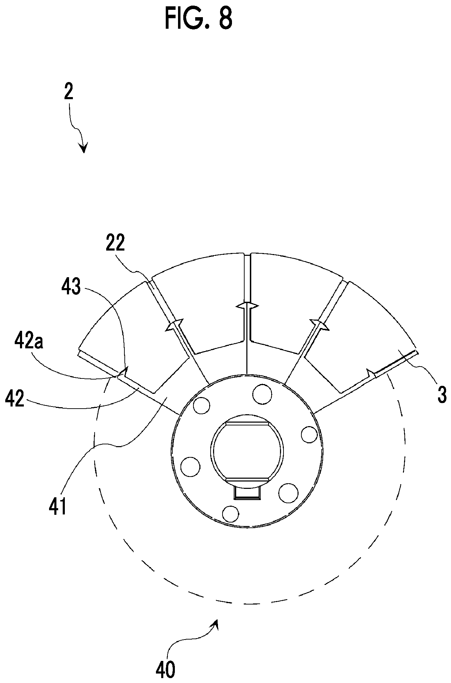

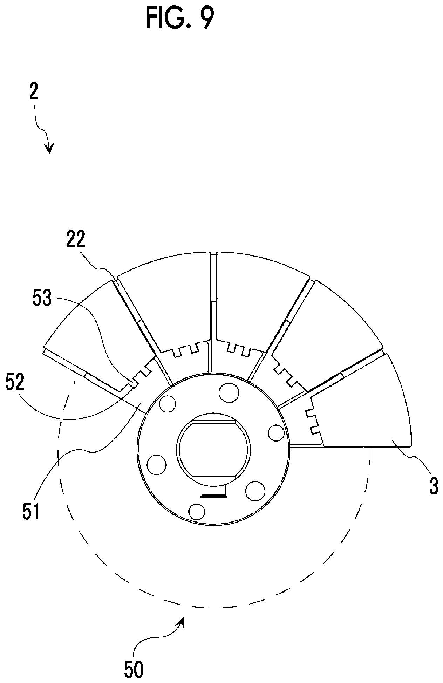

Hereinafter, examples of other aspects of the magnet engagement part in the holder of the magnetic drum according to the present invention will be shown. Figs. 8 and 9 show only a part of the holder, and the broken line portion indicates an omitted portion.

### [Third Embodiment]

A holder 40 shown in Fig. 8 has a claw-shaped structure 42a on the side wall 42 side of the holder as a magnet engagement part 41, and the claw-shaped structure 42a is engaged with an engagement structure 43 provided on the side surface of the magnet 3 to lock the magnet. As a specific example of the engagement structure 43, a groove, a recessed portion structure, or the like can be given.

### [Fourth Embodiment]

A holder 50 shown in Fig. 9 has a plurality of hole portions 52 as a magnet engagement part 51, and the hole portions 52 are engaged with protrusion portions 53 provided at the bottom portion of the magnet 3 to lock the magnet. In order to more reliably fix the magnet, each hole portion 52 and each protrusion portion 53 may be partially deformed.

### [Fifth Embodiment]

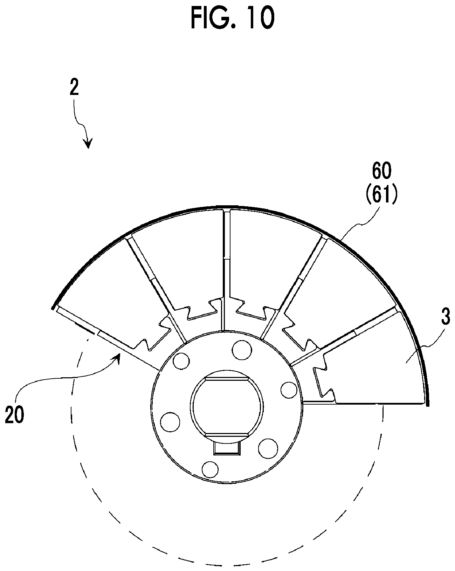

Fig. 10 shows another aspect of the magnetic drum according to the present invention. Fig. 10 shows only a part of the holder, and the broken line portion indicates an omitted portion. The magnetic drum 2 includes, in addition to the holder 20 provided with the magnet engagement part 21 described above, means for locking the magnet from the outer periphery side of the mounted magnet 3. In particular, in a case where two magnets adjacent to each other on the holder are disposed such that the same poles face each other, a force acting on the magnets toward the outside of the holder due to the repulsive forces between the magnets is increased. Therefore, it is preferable to provide locking means 60 for suppressing popping-out of the magnet from the outer periphery side of the mounted magnet.

The locking means 60 for suppressing popping-out of the magnet is not particularly limited. As a specific example, for example, as shown in Fig. 10, a configuration can be given in which a string-shaped locking member 61 fitting to the outer periphery of the mounted magnet 3 is wrapped around the magnet 3. In a case of using the string-shaped locking member 61, in order to more reliably lock the magnet, a groove or the like may be provided on the outer peripheral surface of the magnet 3 to hang the locking member 61.

Further, the locking means 60 is means for suppressing popping-out of the magnet, and as a structure having such a function, the dovetail groove 21a which is the magnet engagement part 21 as shown in Fig. 2 or the claw-shaped structure 42a which is the magnet engagement part 41 as shown in Fig. 8 may be used. The claw-shaped structure 42a may be provided in the side wall 42 of the holder, and for example, the claw-shaped structure 42a may be provided in the top portion of the side wall 42 of the holder to improve the effect of suppressing popping-out of the magnet. Further, in a case where the claw-shaped structure 42a is provided in the top portion of the side wall 42 of the holder, in order to avoid a decrease in magnetic flux density, it is preferable to perform a design such that the side wall 42 itself of the holder is provided not on the entire side surface (magnetic pole surface) of the magnet 3 but only on a part thereof to lock the magnet 3.

In Fig. 10, as the holder, the holder 20 in the first embodiment is shown. However, the structures of the holder and the magnet engagement part of this embodiment are not limited to this. For example, holders or the like having other magnet engagement parts shown in the first to fourth embodiments described above can be used.

Further, the magnetic drum of this embodiment can be used for the magnetic separation device of the first embodiment described above.

The embodiments described above show examples of the magnetic drum and the magnetic separation device. The magnetic drum and the magnetic separation device according to the present invention are not limited to the embodiments described above, and the magnetic drums and the magnetic separation devices according to the embodiments described above may be modified provided that said modifications fall within the scope of the invention, which is defined by the appended claims.

As the magnet engagement part in the present invention, in addition to a specific structure provided in each of the holder and the magnet for engagement of the holder and the magnet, a structure such as a holder having a side wall having a certain height provided on the magnetic pole surface side of a magnet can be selected in consideration of a desired magnet fixing strength, a work cost related to the processing of the holder and the magnet, or the like.

Further, in the magnetic drum according to the present invention, in addition to the magnets disposed adjacent to each other such that the magnetic pole surfaces face each other along the circumferential direction on the holder, a second magnet in which a magnetic pole direction is directed in the radial direction of the magnetic drum may be provided. In this way, a stronger magnetic force is generated on the outer peripheral surface of the magnetic drum.

### Industrial Applicability

The magnetic drum and the magnetic separation device according to the present invention are for recovering magnetic materials contained in a treatment target by a magnetic force, and a high recovery rate is realized regardless of whether it is a liquid (oil-based or water-soluble) or a solid. It may be a system capable of separating, recovering, and removing metal components from a liquid. For example, as the treatment target, for example, a coolant liquid in a metal polishing machine using magnetic metal as a work material, a plating liquid in a device for plating a steel sheet or the like, or the like can be given as an example.

Further, as long as it is an operation of separating magnetic materials such as metal from a treatment target, the magnetic drum and the magnetic separation device according to the present invention can be used for the operation. For example, the magnetic drum and the magnetic separation device according to the present invention may be used for, for example, recovery of useful metals or rare metals from industrial wastes, or removal of foreign matter such as metal powder from beverages, cooking oil, or the like.

### Reference Signs List

100 magnetic separation device
1 main body
1a bottom plate
1b liquid reservoir
2 magnetic drum
2a inner cylinder
2b outer cylinder
3, 3a magnet
4 motor
5 Input part
6a treatment liquid discharge part
6b magnetic material discharge part
7 scraper
8 roller
9 flow regulating wall
20 holder
20a, 20b holder part
21 magnet engagement part
21a dovetail groove
22 yoke
23 yoke fixing part
23a dovetail groove
24 fixing ring
25 fixing bolt
26 through-hole
27 side wall portion
27a groove
30 holder
31 magnet engagement part
40 holder
41 magnet engagement part
42 side wall
42a claw-shaped structure
43 engagement structure
50 holder
51 magnet engagement part
52 hole portion
53 protrusion portion
60 locking means
61 locking member
M magnetic flux
S magnetic sludge

## Claims

1. A magnetic drum (2) comprising:
a plurality of magnets (3, 3a) mounted along a circumferential direction on a holder (20, 30, 40, 50),
the magnets (3, 3a) are disposed such that magnetic pole surfaces face each other along the circumferential direction on the holder (20, 30, 40, 50),
the magnets (3, 3a) are engaged with the holder (20, 30, 40, 50) so as not to move in the circumferential direction and toward an outside,
the magnet (3, 3a) and the holder (20, 30, 40, 50) are locked together by fitting of a recessed portion and a protrusion portion to each other,
the recessed portion is a groove, and
the groove is formed along a direction intersecting the circumferential direction of the holder (20, 30, 40, 50), and
a direction in which the groove intersects with the circumferential direction of the holder (20, 30, 40, 50) is an axial direction of the holder (20, 30, 40, 50),
**characterized in that**
said recessed portion and said protrusion portion are configured so that the direction in which the magnet is inserted into the holder is the axial direction of the holder (20, 30, 40, 50).

2. The magnetic drum (2) according to claim 1,
wherein the magnetic drum (2) includes two holder parts (20a, 20b),
the magnets (3, 3a) are mounted to respective holder parts (20a, 20b), and
the magnets (3, 3a) are disposed such that the same poles of the magnets (3, 3a) adjacent to each other face each other in a state where the two holder parts (20a, 20b) are combined.

3. A magnetic separation device (100) comprising:
the magnetic drum (2) according to claim 1 or 2,
wherein the magnetic drum (2) is configured to rotate to separate magnetic materials in a coolant liquid.

## Patentansprüche

1. Magnettrommel (2), umfassend:
mehrere Magnete (3, 3a), die entlang einer Umfangsrichtung an einem Halter (20, 30, 40, 50) montiert sind,
die Magnete (3, 3a) so angeordnet sind, dass sich die Magnetpolflächen entlang der Umfangsrichtung an dem Halter (20, 30, 40, 50) gegenüberliegen,
die Magnete (3, 3a) mit dem Halter (20, 30, 40, 50) so in Eingriff stehen, dass sie sich nicht in der Umfangsrichtung und nach außen bewegen,
der Magnet (3, 3a) und der Halter (20, 30, 40, 50) durch Einpassen eines vertieften Abschnitts und eines vorstehenden Abschnitts aneinander gesichert sind,
der vertiefte Teil eine Nut ist, und
die Nut entlang einer Richtung gebildet ist, die die Umfangsrichtung des Halters (20, 30, 40, 50) schneidet, und
eine Richtung, in der sich die Nut mit der Umfangsrichtung des Halters (20, 30, 40, 50) schneidet, eine Axialrichtung des Halters (20, 30, 40, 50) ist,
**dadurch gekennzeichnet, dass**
der ausgesparte Abschnitt und der vorstehende Abschnitt so konfiguriert sind, dass die Richtung, in der der Magnet in den Halter eingeführt ist, die Axialrichtung des Halters (20, 30, 40, 50) ist.

2. Magnettrommel (2) nach Anspruch 1,
wobei die Magnettrommel (2) zwei Halteteile (20a, 20b) umfasst,
die Magnete (3, 3a) an den jeweiligen Halterteilen (20a, 20b) befestigt sind, und
die Magnete (3, 3a) so angeordnet sind, dass die gleichen Pole der Magnete (3, 3a), die einander benachbart sind, in einem Zustand einander zugewandt sind, in dem die zwei Halterteile (20a, 20b) kombiniert sind.

3. Magnetische Trennvorrichtung (100), umfassend:
die Magnettrommel (2) nach Anspruch 1 oder 2,
wobei die Magnettrommel (2) so konfiguriert ist, dass sie sich dreht, um magnetische Materialien in einer Kühlflüssigkeit zu trennen.

## Revendications

1. Un tambour magnétique (2) comprenant :
une pluralité d'aimants (3, 3a) montés le long d'une direction circonférentielle sur un support (20, 30, 40, 50),
les aimants (3, 3a) sont disposés de sorte que les surfaces de pôle magnétique se font face le long de la direction circonférentielle sur le support (20, 30, 40, 50),
les aimants (3, 3a) sont mis en prise avec le support (20, 30, 40, 50) afin de ne pas se déplacer dans la direction circonférentielle et vers un extérieur,
l'aimant (3, 3a) et le support (20, 30, 40, 50) sont verrouillés ensemble par raccord d'une partie évidée et d'une partie de saillie l'une par rapport à l'autre,
la partie évidée est une rainure, et
la rainure est formée le long d'une direction coupant la direction circonférentielle du support (20, 30, 40, 50), et
une direction dans laquelle la rainure coupe la direction circonférentielle du support (20, 30, 40, 50) est une direction axiale du support (20, 30, 40, 50),
**caractérisé en ce que** :
ladite partie évidée et ladite partie en saillie sont configurées de sorte que la direction dans laquelle l'aimant est inséré dans le support est la direction axiale du support (20, 30, 40, 50).

2. Le tambour magnétique (2) selon la revendication 1,
dans lequel le tambour magnétique (2) comprend deux parties de support (20a, 20b),
les aimants (3, 3a) sont montés sur les parties de support (20a, 20b) respectives, et
les aimants (3, 3a) sont disposés de sorte que les mêmes pôles des aimants (3, 3a) adjacents entre eux se font face dans un état dans lequel les deux parties de support (20a, 20b) sont combinées.

3. Un dispositif de séparation magnétique (100) comprenant :
le tambour magnétique (2) selon la revendication 1 ou 2,
dans lequel le tambour magnétique (2) est configuré pour tourner afin de séparer les matériaux magnétiques dans un liquide de refroidissement.
